Europäisches Patentamt

European Patent Office

Office européen des brevets

(11) Veröffentlichungsnummer : **0 075 692**
**B1**

(12) # EUROPÄISCHE PATENTSCHRIFT

(45) Veröffentlichungstag der Patentschrift :
30.10.85

(21) Anmeldenummer : 82107272.5

(22) Anmeldetag : 11.08.82

(51) Int. Cl.⁴ : **A 01 F 29/00, A 01 D 43/08**

(54) Einstellbare Halterung für den Scherstab von Häckselmaschinen.

(30) Priorität : 26.09.81 DE 3138416

(43) Veröffentlichungstag der Anmeldung :
06.04.83 Patentblatt 83/14

(45) Bekanntmachung des Hinweises auf die Patenterteilung : 30.10.85 Patentblatt 85/44

(84) Benannte Vertragsstaaten :
AT BE CH FR GB LI

(56) Entgegenhaltungen :
DE-B- 2 209 672
DE-U- 7 143 407
US-A- 4 055 309

(73) Patentinhaber : CLAAS SAULGAU GMBH
Postfach 29
D-7968 Saulgau (DE)

(72) Erfinder : Reber, Erwin
Mittelbergstrasse 13
D-7968 Saulgau (DE)

Jouve, 18, rue St-Denis, 75001 Paris, France

# Beschreibung

Die Erfindung betrifft eine einstellbare Halterung für den Scherstab von Häckselmaschinen nach dem Gattungsbegriff des Anspruches 1.

Bei bekannten Ausführungen dieser Art (beispielsweise Gebrauchsmusterschrift 71 43 407) wird beidseitig des Häckslergehäuses je nur eine Klemmschraube für die Befestigung des Scherstabes an der mit dem Häckslergehäuse verbundenen Tragschiene verwendet. Diese Halterung ist bei kleineren Häckslern durchaus brauchbar, bei großen leistungsstarken Maschinen ist jedoch die Klemmwirkung mit nur einer Klemmschraube nicht ausreichend. Es besteht die Möglichkeit, daß während des Betriebes der Scherstab verschoben und somit infolge der Vergrößerung des Schneidspaltes zwischen umlaufenden Häckselmessern und Scherstab die Schneidleistung stark herabgesetzt wird. Ein Anhalten der Maschine und Nachstellen des Scherstabes ist dann unumgänglich.

Es liegt deshalb nahe, für eine sichere Halterung des Scherstabes bei leistungsstarken Häckselmaschinen je 2 Klemmschrauben auf jeder Häckslergehäuseseite zu verwenden. Dadurch wächst aber der Aufwand für die Nachstellung des Scherstabes, weil nun 4 Klemmschrauben zuerst gelöst und nach der Zustellung des Scherstabes wieder angezogen werden müssen.

Mit der Erfindung soll ein konstruktiv einfache Ausführung geschaffen werden, bei der trotz Verwendung von 4 Klemmschrauben für die Nachstellung des Scherstabes nur 2 Klemmschrauben betätigt werden müssen. Außerdem soll gewährleistet sein, daß die Klemmschrauben sich keinesfalls ungewollt selbsttätig lösen können. Dies wird durch Maßnahmen entsprechend dem Kennzeichen des Anspruches 1 erreicht.

Durch die erfindungsgemäße Ausbildung der Spannplatte kann diese nach Lösen der einen Klemmschraube um ihre Kippachse über den Schaft der anderen Klemmschraube in deren Axialrichtung schwenken, womit letztere selbsttätig entspannt wird. Zum Festspannen des Scherstabes wird lediglich wieder die eine Klemmschraube angezogen, wodurch die Spannplatte zurückgeschwenkt und damit auch die andere Klemmschraube wieder verspannt wird. Die Spannplatte ist dabei leicht elastisch verformt und die dadurch bedingte stetige Spannkraft auf die Klemmschrauben gewährleistet, daß diese sich durch Erschütterung während des Betriebes der Maschine nicht ungewollt lösen.

Weitere Merkmale der Erfindung ergeben sich aus den Unteransprüchen sowie aus der nachfolgenden Beschreibung. In letzterer ist ein Ausführungsbeispiel anhand der angefügten Zeichnung näher erläutert. Diese zeigt in

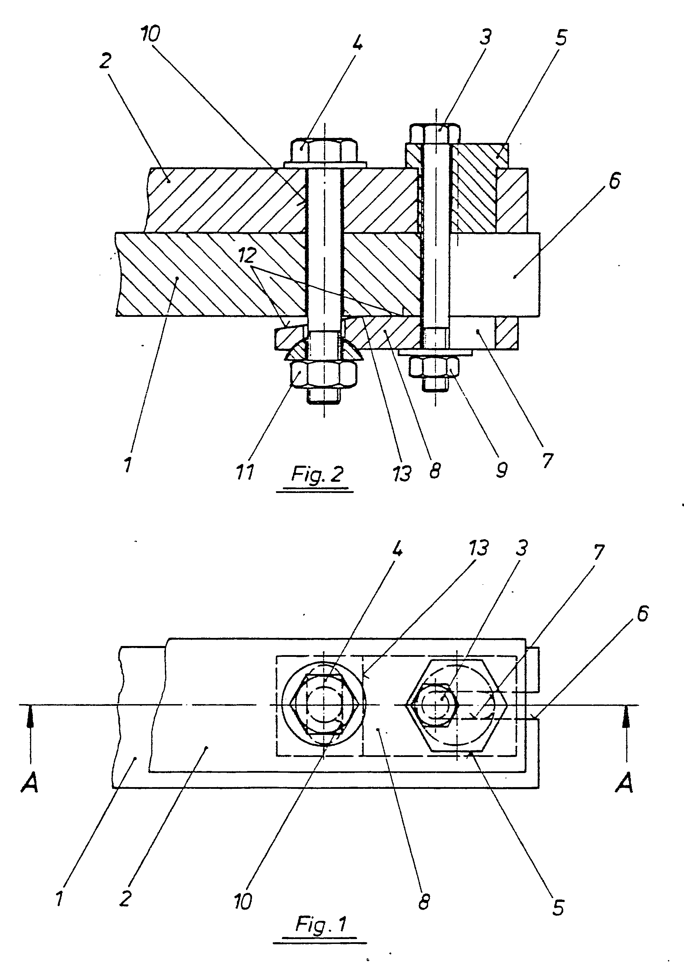

Figur 1 die Draufsicht auf einen Scherstab mit der erfingungsgemäßen einstellbaren Halterung und in

Figur 2 eine Schnittdarstellung nach der Linie A-A der Fig. 1.

Die zum Ausführungsbeispiel gehörende Häckselmaschine ist in ihrem Aufbau und ihrer Funktion grundsätzlich bekannter Art und hinsichtlich ihrer Details für die Erfindung ohne Bedeutung, weshalb auf ihre Erläuterung verzichtet und von ihr nur die mit dem Häckslergehäuse verbundene Tragschiene 1 für den Scherstab 2 gezeigt wird. Der Scherstab 2 wirkt mit den Messern einer im Häckslergehäuse drehbar gelagerten Häckseltrommel (nicht dargestellt) zusammen und ist beidseitig des Häckslergehäuses von diesem seitlich herausstehend mittels Klemmschrauben 3, 4 an der Tragschiene 1 verstellbar befestigt. Es ist in der Zeichnung nur die (in Fahrtrichtung der Maschine gesehen) rechte Seite der Scherstab-Halterung gezeigt. Die linke Seite ist gleichgestaltet.

Das der Nachstellung des Scherstabes 2 dienende Exzenterstück 5 ist im Scherstab 2 drehbar gelagert und von der Klemmschraube 3 exzentrisch durchgriffen. Die Klemmschraube 3 ist weiterhin durch parallel zur Schneidkante des Scherstabes 2 verlaufende Langlöcher 6, 7 in der Tragschiene 1 und in der Spannplatte 8 hindurchgesteckt und in die Mutter 9 eingedreht. Die Klemmschraube 4 durchsetzt ein in Nachstellrichtung liegendes Langloch 10 im Scherstab 2 sowie je ein Rundloch in der Tragschiene 1 und in der Spannplatte 8 und ist in die Mutter 11 eingedreht. Die Spannplatte 8 ist an ihrer Auflageseite als Wippe 12 mit zwischen den beiden Klemmschrauben 3, 4 in Fahrtrichtung liegender Kippachse 13 ausgebildet.

Die Wirkungsweise der verstellbaren Halterung ist folgende :

Bei der Erstmontage wird nach Einstellung des Schneidspaltes zwischen den Messern der umlaufenden Häckseltrommel und der Schneidkante des Scherstabes 2 die Mutter 11 auf der Klemmschraube 4 soweit angezogen, daß die Spannplatte 8 durch Schwenken um die Kippachse 13 im Bereich der Klemmschraube 3 etwas von der Unterseite der Tragschiene 1 absteht. Darauf wird die Klemmschraube 3 so stark angezogen, daß die Spannplatte 8 um ihre Kippachse 13 in Richtung der Tragschiene 1 leicht elastisch verformt wird.

Für eine Nachstellung des Scherstabes 2 wird lediglich die Klemmschraube 3 gelöst, womit auch die Klemmschraube 4 selbsttätig entspannt wird. Dann wird durch Drehen des Exzenterstückes 5, was mit einem Schraubenschlüssel am Sechskantkopf des Exzenterstückes 5 geschehen kann, der Schneidspalt eingestellt und danach wiederum die Klemmschraube 3 angezogen.

## Patentansprüche

1. Einstellbare Halterung für den Scherstab (2) von Häckselmaschinen, der beidseitig des Häckslergehäuses mit je einer Klemmschraube (3) an einer mit dem Häckslergehäuse verbundenen Tragschiene (1) befestigt und mit Exzenterstücken (5) nachstellbar ist, die von den Klemmschrauben (3) exzentrisch durchgriffen sind, dadurch gekennzeichnet, daß jeder Klemmschraube (3) eine weitere, bei Lösen den Scherstab (2) in Nachstellrichtung freigebende Klemmschraube (4) zugeordnet ist, und daß diese beiden Klemmschrauben (3, 4) eine gemeinsame Spannplatte (8) durchgreifen, welche an ihrer Auflageseite als Wippe (12) mit zwischen den beiden Klemmschrauben (3, 4) liegender Kippachse (13) ausgebildet ist.

2. Einstellbare Halterung für den Scherstab von Häckselmaschinen nach Anspruch 1, dadurch gekennzeichnet, daß die Spannplatte (8) auf der dem Scherstab (2) gegenüberliegenden Seite der Tragschiene (1) vorgesehen ist.

3. Einstellbare Halterung für den Scherstab von Häckselmaschinen nach Ansprüchen 1 und 2, dadurch gekennzeichnet, daß der Abstand der Kippachse (13) von der das Exzenterstück (5) durchgreifenden Klemmschraube (3) größer als von der zugeordneten Klemmschraube (4) ist. ·

**Claims**

1. An adjustable mounting means for the shear bar (2) of chaff cutting machines, which is secured at both sides of the cutter housing by respective clamping screws (3) to a carrier rail (1) connected to the cutter housing, and which is adjustable by eccentric members (5) through which the clamping screws (3) eccentrically pass, characterised in that associated with each clamping screw (3) is a further clamping screw (4) which on being slackened releases the shear bar (2) in the adjusting direction, and that said two clamping screws (3, 4) pass through a common clamping plate (8) which on its contact side is' formed as a rocker member (12) with a tilt axis (13) which is between the two clamping screws (3, 4).

2. An adjustable mounting means for the shear bar of chaff cutting machines according to claim 1 characterised in that the clamping plate (8) is provided on the side of the carrier rail (1) which is in opposite relationship to the shear bar (2).

3. An adjustable mounting means for the shear bar of chaff cutting machines according to claims 1 and 2 characterised in that the spacing of the tilt axis (13) from the clamping screw (3) which passes through the eccentric member (5) is larger than from the associated clamping screw (4).

**Revendications**

1. Dispositif de retenue réglable pour la barre de cisaillement (2) de hache-paille, laquelle est fixée de part et d'autre du bâti du hache-paille respectivement au moyen d'une vis de serrage (3) à une barre porteuse (1) reliée au bâti du hache-paille et peut être réajustée au moyen de pièces excentriques (5) à travers lesquelles les vis de serrage (3) passent de façon excentrée, caractérisé en ce qu'à chaque vis de serrage (3) est associée une autre vis de serrage (4) qui en cas de desserrage libère la barre de cisaillement (2) dans la direction de réajustement, et en ce que ces deux vis de serrage (3, 4) traversent une plaque de serrage commune (8) qui du côté où elle prend appui est réalisée à la manière d'une bascule (12) ayant son axe de basculement (13) situé entre les deux vis de serrage (3, 4).

2. Dispositif de retenue réglable pour la barre de cisaillement de hache-paille selon la revendication 1, caractérisé en ce que la plaque de serrage (8) est prévue du côté de la barre porteuse (1) opposé à la barre de cisaillement (2).

3. Dispositif de retenue réglable pour la barre de cisaillement de hache-paille selon la revendication 1 ou 2, caractérisé en ce que la distance séparant l'axe de basculement (13) de la vis de serrage (3) traversant la pièce excentrique (5) est plus grande que celle qui le sépare de la vis de serrage correspondante (4).

Fig. 2

Fig. 1